# EUROPÄISCHE PATENTSCHRIFT

(11) **EP 0 550 711 B1**
(45) Veröffentlichungstag und Bekanntmachung des Hinweises auf die Patenterteilung: **13.12.1995**
(21) Anmeldenummer: 92912593.8
(22) Anmeldetag: 02.07.1992
(51) Int. Cl.: F24F 3/044, F24F 12/00, F24F 13/00

(54) **WÄRMERÜCKGEWINNUNGSEINHEIT FÜR DIE VERWENDUNG IN KLIMASCHRÄNKEN**
HEAT RECOVERY UNIT FOR USE IN AIR CONDITIONERS
UNITE DE RECUPERATION DE CHALEUR UTILISABLE DANS DES ARMOIRES DE CLIMATISATION

(30) Priorität: 09.07.1991 CH 1007/92
(43) Veröffentlichungstag der Anmeldung: 14.07.1993
(73) Patentinhaber: SIEGRIST, Urs, 3006 Bern (CH)
(72) Erfinder: SIEGRIST, Urs, 3006 Bern (CH)
(74) Vertreter: White, William
(86) Internationale Anmeldenummer: CH9200135
(87) Internationale Veröffentlichungsnummer: WO9301452

(56) Entgegenhaltungen:
- FR-A- 2 311 268
- US-A- 3 698 472

## Beschreibung

Die vorliegende Erfindung betrifft eine Wärmerückgewinnungseinheit für die Verwendung in Klimaschränken, umfassend einen in einen Zuluft- und einen Abluftteil unterteilten Schrank, mit Anschlüssen für Aussenluft, Zuluft, Abluft und Fortluft, gemäss dem Oberbegriff des unabhängigen Patentanspruchs 1.

Wärmerückgewinnungseinheiten für die Verwendung in Klimaschränken sind bekannt und dienen der Rückgewinnung von mit der Abluft aus den klimatisierten Räumen abgeführter Wärmeenergie. Sie bestehen inder Regel aus herkömmlichen Wärmetauschern, durch die die Abluft durchgeblasen wird und in denen in zwei unabhängigen Kreisläufen Flüssigkeit zirkuliert. Auch Rekuperativ-Tauscher mit getrennten und gekreuzten Luftströmen sind weitverbreitet. Diese bekannten Wärmerückgewinnungseinheiten sind voluminös und in ihrer Konstruktion aufwendig. Dies kann sich in erster Linie im Preis ausdrücken und zudem sind sie frostgefährdet und besitzen einen hohen Luftwiderstand auf, was einen erhöhten Energieaufwand bedingt. Ihre Wirkungsgrade sind überdies mit 50 - 70% sehr bescheiden.

In der FR-A-2 311 268 ist ein Wärmetauscher beschrieben, bei dem ein metallisches Band um zwei Walzen geführt und bewegt wird. Die beiden Luftabteile sind durch eine Zwischenwand voneinander getrennt, aber es ist aus der Veröffentlichung nicht ersichtlich, wie diese Wand ausgebildet ist, vielmehr scheint es Spalte zwischen dem Band und der Wand zu haben, so dass ein Luftdurchtritt nicht ausgeschlossen werden kann.

In der US-A-3,698,472 ist ein ähnlicher Wärmetauscher beschrieben, bei dem die beiden Luftströme mittels Trennblechen voneinander separiert sind. Das Band wird dabei zwischen zwei sich gegenüberstehenden Blechkanten durchgezogen. Dies ergibt entweder keine gute Abdichtung zwischen den beiden Luftkanälen, ähnlich der oben beschriebenen Art, ober das Band wird stark auf Abrieb beansprucht, so dass ein grosser Unterhalt notwendig ist.

Der vorliegenden Erfindung liegt die Aufgabe zugrunde, eine Wärmerückgewinnungseinheit vorzuschlagen, die gegenüber den bekannten Systemen weniger Platz beansprucht, einen guten Wirkungsgrad bei kleinerem Druckverlust hat und somit weniger Fremdenergie benötigt, ferner eine sichere und gute Trennung der Luftströme aufweist.

Erfindungsgemäss wird dies erreicht mit einer mittigen Führungsrolle zwischen den beiden gegenläufigen Bandteilen im Bereich zwischen Zuluft- und Abluftteil ferner durch zwei von aussen das Band gegen die Führungsrolle pressende Dichtungsrollen, um das Band dauernd leicht gegen die Führungsrolle anzupressen, derart, dass in der Längsrichtung des Wärmerückgewinnungsbandes keine Luft zwischen Zuluft- und Abluftteil zirkulieren kann.

Weitere Eigenschaften und Vorteile einer erfindungsgemässen Wärmerückgewinnungseinheit ergeben sich aus der nachfolgenden Beschreibung einer vorteilhaften Ausführungsvariante anhand der Zeichnung. In dieser zeigt
Fig. 1 einen Längsschnitt durch eine vorteilhafte Ausführungsvariante einer erfindungsgemässen Wärmerückgewinnungseinheit, und
Fig. 2 eine schematische Seitenansicht eines mit einer entsprechenden Wärmerückgewinnungseinheit versehenen Monoblock-Klimaschrankes ohne Seitenwand.

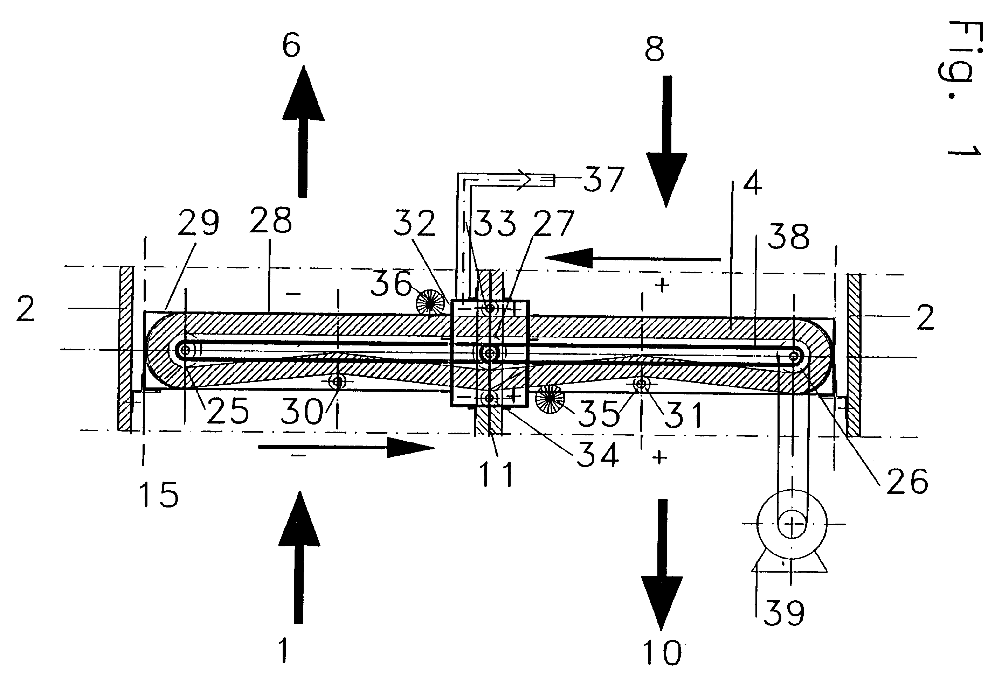

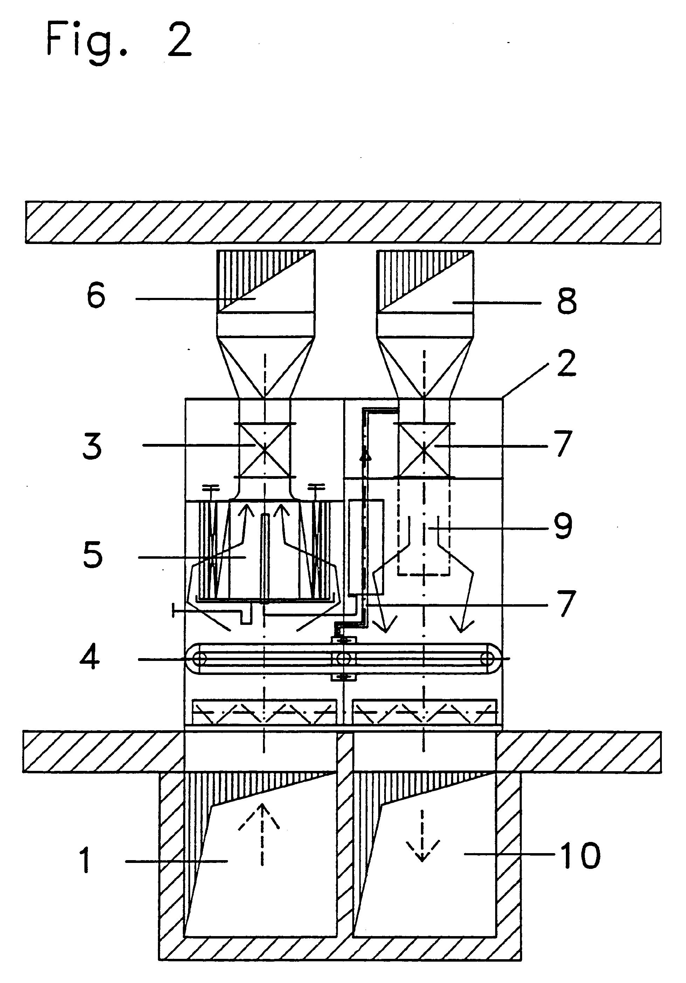

Der Fachmann erkennt in Fig. 1 eine Wärmerückgewinnungseinheit in Form eines Wärmerückgewinnungsbandes 4, bei dem es sich um ein vorteilhafterweise aus Kupfer- oder Aluminiumdrähten gesponnenes oder gestricktes mehrschichtiges oder aus Spänen gebildetes Band handelt, das einerseits unterhalb des Konditionierungszylinders 5 (Fig. 2) des Aussenluftteiles und andererseits unterhalb eines eventuellen Verteilzylinders 9 (Fig. 2) im Abluftteil angeordnet ist und über Rollen 25, 26 und 27 in Pfeilrichtung von der Zuluftseite des (Monoblock-) Klimaschrankes (Fig. 2) in die Abluftseite und umgekehrt bewegt wird. Dies führt dazu, dass die in Pfeilrichtung von unten in den Schrank 2 einströmende kalte Aussenluft vor dem Durchströmen des Konditionierungszylinders 5 zweimal durch das sich bewegende Wärmerückgewinnungsband 4 hindurch strömt und dabei in zwei Schritten erwärmt wird. Auf der anderen Seite, vor dem Verlassen des Schrankes 2 in Pfeilrichtung, wird die warme Abluft ebenfalls zweimal durch das Wärmerückgewinnungsband 4 geleitet und dadurch abgekühlt. Dadurch wird ein sehr hoher Wärmerückgewinnungs-Wirkungsgrad von 70 - 80% erreicht, der es ermöglicht, den Lufterhitzer und den Luftkühler im Klimaschrank entsprechend kleiner zu dimensionieren.

Gemäss Fig. 1 können die Rollen 25, 26 und 27, sowie bei grösseren Monoblock-Klimaschrank-Typen weitere Rollen des Wärmerückgewinnungsbandes 4 auf einer Stahlblechkonstruktion 28 befestigt und das Wärmerückgewinnungsband 4 in einem auf Winkeln 15 abgestützten Stahlblechteil 29 eingefasst sein, die zum Klimaschrank gehören. Um das Wärmerückgewinnungsband 4 stets unter gewünschter Spannung halten zu können, können zwei oder mehrere verstellbare Spannrollen 30 und 31 vorgesehen werden.

Um zu verhindern, dass zwischen dem Zuluftteil des Schrankes 2 und dem Abluftteil desselben im Bereich, in dem das Wärmerückgewinnungsband 4 von einem Teil in den anderen und zurück verläuft, unnötig viel Luft zirkuliert und dadurch Energie verloren geht oder falsche Luft überströmt, ist die herkömmliche Trennwand 11 des Klimaschrankes an dieser Stelle durch eine Konstruktion zu ersetzen, wie sie sich aus Fig. 1 ergibt. Es handelt sich dabei um ein kastenförmig gebogenes Stahlblechteil 32, in dem über und unterhalb der Rolle 27 je eine Dichtungs- und Führungsrolle 33 resp. 34 montiert ist, die das Wärmerückgewinnungsband 4 leicht gegen die Rolle 27 andrücken, derart, dass in der Längsrichtung des Wärmerückgewinnungsbandes an dieser Stelle praktisch keine Luft durchströmen kann.

Zudem kann vom Gehäuseteil links des Klimaschrankes nach Fig. 2, also im Aussenluftteil, eine Schlauchverbindung vor den Abluftventilator im Abluftteil vorgesehen werden, mit welcher mittels einer Regulierklappe ein Unterdruck in diesem Gehäuseteil erzeugt werden kann, der etwas grösser ist als jener im Aussenluftteil. Damit kann verhindert werden, dass falsche Abluft in den Aussenluftteil gelangen kann.

Das Wärmerückgewinnungsband 4 kann mittels eines auf die eine oder mehrere Rollen 25, 26 oder 27 wirkenden Motors 39 angetrieben werden. Dieser Motor 39 kann, zwecks Ermöglichung einer Leistungsregulierung, stufenlos über Temperaturfühler und Regler gesteuert werden, indem die Bandgeschwindigkeit verändert wird. Zwecks Entfernung von sich am Wärmerückgewinnungsband 4 eventuell ablagernden Verschmutzungen können im Stahlblechteil 29 oder an anderer adäquater Stelle Bürstenrollen 35, 36 vorgesehen werden, die vorteilhafterweise gegenläufig zum Wärmerückgewinnungsband laufen und den Staub abbürsten und -klopfen. Dadurch gelangt der Staub im Aussenluftteil in den Filter und bei der Abluft wird er direkt ind Freie geblasen.

In Fig. 2 ist schematisch ein Monoblock-Klimaschrank dargestellt, in den eine Wärmerückgewinnungseinheit gemäss der vorliegenden Erfindung integriert ist. Man erkennt, dass der Schrank 2 durch die Luft in vertikaler Richtung durchströmt wird, da die Aussenluft beispielsweise durch einen Aussenluftbodenkanal 1 in Pfeilrichtung von unten her mittels einem im Monoblock-Klimaschrank oben angeordneten Zuluftventilator 3 angesaugt wird. Nach dem Einströmen in den Schrank 2 durchfliesst die Aussenluft das Wärmerückgewinnungsband 4, bevor sie über einen Konditionierungszylinder 5 in den Zuluftventilator 3 gelangt, von wo aus sie in Pfeilrichtung oben aus dem Schrank 2 hinaus über einen Zuluftkanal 6 in die zu klimatisierenden Räume geblasen wird.

Aus diesen Räumen kehrt die Abluft, durch einen Abluftventilator 7 in Pfeilrichtung von oben her über einen Abluftkanal 8 in den Schrank 2 zurück. Notwendigenfalls über einen Verteilzylinder 9 aus Lochblech mit zumindest annähernd zylindrischem Querschnitt wird die Abluft erneut über das Wärmerückgewinnungsband 4 beispielsweise in einen Fortluftbodenkanal 10 geblasen.

Für den Fachmann ergibt sich aus obiger Beschreibung eines mit einer erfindungsgemässen Wärmerückgewinnungseinheit versehenen Monoblock-Klimaschrankes automatisch, dass der Schrank 2 unterteilt sein muss, um den Zuluftstrom und den Abluftstrom separat leiten zu können. Diese Trennung wird vorteilhafterweise durch eine isolierte Trennwand 11 erreicht, in der eine in der Zeichnung nicht dargestellte Umluft-Bypass-Klappe vorgesehen werden kann.

Die erfindungsgemässe Wärmerückgewinnungseinheit kann sowohl als integrierender Bestandteil eines Klimaschrankes, vorteilhafterweise eines Monoblock-Klimaschrankes mit senkrechter Luftführung, als auch als unabhängiger Zusatz zu bestehenden Klimaschränken oder -geräten konzipiert werden. Sie funktioniert sowohl in horizontaler als auch in vertikaler Auslegung.

## Patentansprüche

1. Wärmerückgewinnungseinheit für die Verwendung in Klimaschränken, umfassend einen in einen Zuluft- und einen Abluftteil unterteilten Schrank (2) mit Anschlüssen für Aussenluft, Zuluft, Abluft und Fortluft, mit einem zwischen den Zuluft- und Abluftteilen des Schrankes (2) bewegbaren, über zwei Walzen (25,26) geführten endlosen Band (4) aus einem Material mit guter Wärmekapazität, **gekennzeichnet durch** eine mittige Führungsrolle (27) zwischen den beiden gegenläufigen Bandteilen im Bereich zwischen Zuluft- und Abluftteil ferner durch zwei von aussen das Band (4) gegen die Führungsrolle (27) pressende Dichtungsrollen (33,34), um das Band dauernd leicht gegen die Führungsrolle (27) anzupressen, derart, dass in der Längsrichtung des Wärmerückgewinnungsbandes (4) keine Luft zwischen Zuluft- und Abluftteil zirkulieren kann.

2. Wärmerückgewinnungseinheit nach Anspruch 1, **dadurch gekennzeichnet**, dass die partie zwischen kalter Zuluft und warmer Abluftseite ein Blechgehäuse (32) angeordnet ist, in dem die Führungsrolle (27) und die beiden Dichtungsrollen (33,34) untergebracht sind.

3. Wärmerückgewinnungseinheit nach Anspruch 1 oder 2, **dadurch gekennzeichnet**, dass Spannrollen (30,31) zwischen den Umlenkrollen (25,26) und den Dichtungsrollen (33,34) vorhanden sind.

4. Wärmerückgewinnungseinheit nach Anspruch 2 oder 3, **dadurch gekennzeichnet**, dass Bürstenrollen (35,36) jeweils stromabwärts des Blechgehäuses (32) vorhanden sind, um mögliche, sich auf dem Wärmerückgewinnungsband (4) abgelagerte Verschmutzungen zu entfernen.

## Claims

1. Heat recovery unit for use in air-conditioning cabinets, comprising a cabinet (2), which is subdivided into a supply-air part and a vitiated-air part and has connections for outside air, supply air, vitiated air and exhaust air, and having an endless belt (4) movable between the supply-air part and the vitiated-air part of the cabinet (2), guided via two rollers (25, 26) and made of a material having good heat capacity, characterized by a central guide roller (27) between the two belt parts, running in opposite directions, in the area between supply-air part and vitiated-air part and furthermore by two sealing rollers (33, 34), pressing the belt (4) from outside against the guide roller (27), in order to continuously press the belt lightly against the guide roller (27) in such a way that no air can circulate between supply-air part and vitiated-air part in the longitudinal direction of the heat recovery belt (4).

2. Heat recovery unit according to Claim 1, characterized in that a sheet-metal housing (32) is arranged in the section between cold supply air and warm vitiated-air side, in which sheet-metal housing (32) the guide roller (27) and the two sealing rollers (33, 34) are accommodated.

3. Heat recovery unit according to Claim 1 or 2, characterized in that there are tension rollers (30, 31) between the deflection rollers (25, 26) and the sealing rollers (33, 34).

4. Heat recovery unit according to Claim 2 or 3, characterized in that there are brush rollers (35, 36) in each case downstream of the sheet-metal housing (32) in order to remove possible contaminants deposited on the heat recovery belt (4).

## Revendications

1. Unité de récupération de chaleur à utiliser dans des armoires de climatisation, comprenant une armoire (2) subdivisée en un compartiment pour l'air entrant et un compartiment pour l'air sortant, avec des raccords pour l'air extérieur, l'air entrant, l'air sortant et l'air d'échappement, avec une bande sans fin (4) guidée sur deux rouleaux (25, 26) se déplaçant entre les compartiments pour l'air entrant et pour l'air sortant de l'armoire (2), en une matière ayant une bonne capacité thermique, caractérisée par un rouleau de guidage central (27) placé entre les deux brins de la bande circulant en sens contraire dans la région située entre le compartiment pour l'air entrant et le compartiment pour l'air sortant, en outre par deux rouleaux d'étanchéité (33, 34) pressant par l'extérieur la bande (4) contre le rouleau de guidage (27), pour presser légèrement la bande en permanence contre le rouleau de guidage (27) de telle manière qu'il ne puisse pas y avoir de circulation d'air dans le sens longitudinal de la bande de récupération de chaleur (4) entre le compartiment pour l'air entrant et le compartiment pour l'air sortant.

2. Unité de récupération de chaleur suivant la revendication 1, caractérisée en ce que dans la partie située entre le côté de l'air entrant froid et le côté de l'air sortant chaud est disposé un caisson en tôle (32), dans lequel sont placés le rouleau de guidage (27) et les deux rouleaux d'étanchéité (33, 34).

3. Unité de récupération de chaleur suivant la revendication 1 ou 2, caractérisée en ce que des rouleaux tendeurs (30, 31) sont disposés entre les rouleaux de déviation (25, 26) et les rouleaux d'étanchéité (33, 34).

4. Unité de récupération de chaleur suivant la revendication 2 ou 3, caractérisée en ce que des rouleaux de brossage (35, 36) sont disposés de part et d'autre, à l'aval du caisson en tôle (32), pour enlever des saletés pouvant s'être déposées sur la bande de récupération de chaleur (4).
